# EUROPÄISCHE PATENTSCHRIFT

(11) **EP 0 453 748 B1**
(45) Veröffentlichungstag und Bekanntmachung des Hinweises auf die Patenterteilung: **11.08.1993**
(21) Anmeldenummer: 91103774.5
(22) Anmeldetag: 13.03.1991
(51) Int. Cl.: B65D 88/34, A01C 3/02, A01F 25/13

(54) **Abdeckung für Flüssigkeitsbecken**
Covering for fluid basin
Couverture pour bassin rempli de liquide

(30) Priorität: 26.04.1990 DE 4013239
(43) Veröffentlichungstag der Anmeldung: 30.10.1991
(73) Patentinhaber: FIRMA CARL NOLTE GmbH & Co., D-48268 Greven (DE)
(72) Erfinder: Helmich, Josef, W-4400 Münster (DE)
(74) Vertreter: Habbel, Hans-Georg, Dipl.-Ing.

(56) Entgegenhaltungen:
- EP-A- 0 036 915
- DE-A- 2 640 015
- FR-A- 1 137 129
- FR-A- 1 265 642
- FR-A- 1 437 333
- US-A- 4 189 058

## Beschreibung

Die Erfindung bezieht sich auf eine Abdeckung für Flüssigkeitsbecken gemäß dem Oberbegriff des Hauptanspruches.

Aus der US-A-30 70 419 ist eine Abdeckung für in großen Behältern gelagerte Flüssigkeiten bekannt, um diese Flüssigkeiten einerseits gegen das Hineinfallen von Verunreinigungen zu schützen und andererseits gegen Verdunsten zu sichern. Hierbei wird eine Abdeckung vorgeschlagen, die aus miteinander verbundenen Plastikelementen besteht. An der Oberseite dieser Plastikelemente sind Bojen angeordnet, deren Aufgabe nicht erläutert ist, wobei die Bahnen der Plastikelemente so leicht sind, daß sie von sich aus aufgrund der Materialwahl aufschwimmen. Die vorgesehenen Bojen sind offensichtlich eine an sich überflüssige Hilfsmaßnahme oder sollen der Markierung dienen. Weiterhin wird in dieser Literaturstelle darauf hingewiesen, daß Regen durch entsprechende Öffnungen zwischen den Kunststoffbahnen durchfließen können muß, d. h. er soll sich nicht auf der Oberseite sammeln, um dadurch nicht das Gewicht der Abdeckung unnötig zu erhöhen. Ein Zusetzen von Entlüftungsöffnungen bei dieser bekannten Einrichtung wird überhaupt nicht diskutiert.

Eine bekannte Abdeckung für Flüssigkeitsbecken gemäß dem Oberbegriff des Hauptanspruches wird in dem DE-U-88 08 386 beschrieben. Abdeckungen dieser Art dienen als Geruchsverschluß beispielsweise für mit Gülle, Abwasser od. dgl. gefüllte Becken. Weiterhin haben die Abdeckungen die Aufgabe, die Flüssigkeitsoberfläche gegen ein Hineinfallen von Gegenständen oder Menchen zu schützen und schließlich soll diese Abdeckung das Entweichen von Wärme aus der abgedeckten Flüssigkeit verhindern.

Bei den bekannten, zum Stand der Technik gehörenden Abdeckungen tritt immer wieder das Problem auf, daß die in der Abdeckbahn vorgesehenen Gasdurchtrittsöffnungen durch die festen Bestandteile der Gülle verstopft werden, so daß damit die Funktion der Gasdurchtrittsöffnungen aufgehoben wird und eine unliebsame und gefährliche Gasansammlung auftreten kann.

Weiterhin haben die bekannten Gasdurchtrittsöffnungen den Nachteil, daß sie keinen Schutz gegen das Eindringen von Regenwasser in den Bereich unter die Abdeckung darstellen, vielmehr kann das Regenwasser durch die Gasdurchtrittsöffnungen nach unten gelangen. Hierdurch erfolgt ein unerwünschtes Verdünnen der Gülle.

Der Erfindung liegt die Aufgabe zugrunde, eine Abdeckung für Flüssigkeitsbecken zu schaffen, die Gasdurchtrittsöffnungen aufweist, die aber einerseits von Innen nicht durch feste Güllebestandteile verstopft werden können, andererseits den Eintritt von Regen weitgehend ausschließen.

Diese der Erfindung zugrundeliegende Aufgabe wird durch die Lehre des Hauptanspruches gelöst.

Mit anderen Worten ausgedrückt, wird vorgeschlagen, daß über den Bereich der Abdeckbahn, der auf Flüssigkeit, beispielsweise auf Gülle aufliegt, verteilt Schwimmkörper angeordnet sind, die hohlkegelförmig ausgebildet sind. Hierbei weist die kleine Öffnung des Hohlkegels nach oben und die große Öffnung nach unten, so daß einerseits diese Schwimmkörper, die beispielsweise aus Schaumstoff bestehen, über einen großen Fußbereich auf der Gülle aufschwimmen, andererseits der Gülle bzw. der Flüssigkeit benachbart eine große Öffnung zur Verfügung gestellt wird, so daß Güllepartikelchen diese Öffnung nicht verschließen können. Dadurch, daß aber dieser Schwimmkörper kegelförmig ausgebildet ist, weist er nach oben mit einer kleinen Öffnung hin, die noch zusätzlich durch Folie abgedeckt ist, wobei in diesem Bereich der Folie ein Kreuzschlitz vorgesehen ist. Regenwasser kann also nur ganz gering in diesen Bereich eindringen; der Hauptanteil fließt an den kegelförmigen Außenwandungen des mit der Folie abgedeckten Schwimmkörpers ab, während aber das Gas problemlos entweichen kann.

Außerdem ist die Abdeckbahn mit einem Öffnungsbereich versehen, der trotz abgedecktem Flüssigkeitsbecken einen Zugang zu der Flüssigkeit ermöglicht, um somit ein Durchmischen der Flüssigkeit und ein Abpumpen mit entsprechenden Instrumenten und Arbeitswerkzeugen durchführen zu können.

Weitere vorteilhafte Ausgestaltungen der erfindungsgemäßen Abdeckung gehen aus den Unteransprüchen hervor.

Ein Ausführungsbeispiel der Erfindung wird nachfolgend anhand der Zeichnungen erläutert. Die Zeichnungen zeigen dabei in
- Fig. 1: in einer Draufsicht eine Abdeckung, in
- Fig. 2: einen Schnitt gemäß der Linie 2 -2 in Fig. 1, in
- Fig. 3: einen Schnitt gemäß der Linie 3 - 3 in Fig. 1, in
- Fig. 4: einen Schnitt gemäß der Linie 4 - 4 in Fig. 1 und in
- Fig. 5: ein Erdbecken, das mit einer Dichtungsbahn ausgekleidet ist, die Abdeckung liegt auf dieser Dichtungsbahn auf und in
- Fig. 6: eine Darstellung entsprechend Fig. 5, aber mit eingefüllter Flüssigkeit, beispielsweise Gülle.

In den Zeichnungen ist eine aus einer Gewebe- und/oder Folienbahn bestehende Abdeckbahn 1 gezeichnet, die Gasdurchtrittsöffnungen 2 aufweist.

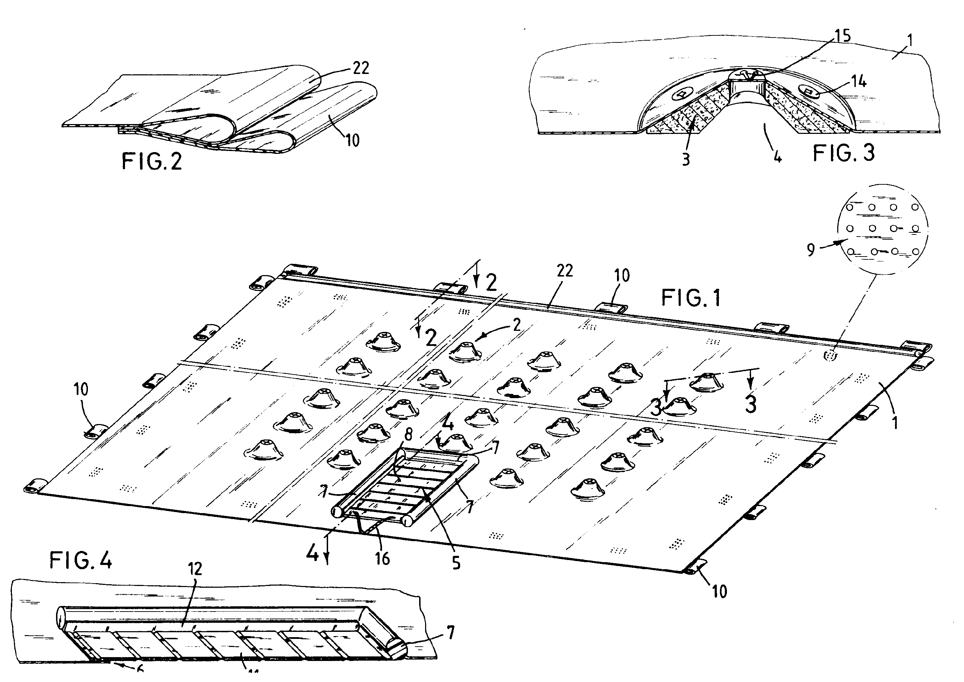

Zur Bildung dieser Gasdruchtrittsöffnungen sind an der Unterseite der Abdeckbahn 1 Schwimmkörper 3 befestigt, die außen und innen hohlkegelförmig ausgebildet sind, so daß auch eine kegelförmige Öffnung 4 geschaffen wird. Aus Fig. 3 ist erkennbar, daß diese z. B. aus Schaumstoff bestehenden Schwimmkörper 3 über Befestigungsniete 14 an der Unterseite der Abdeckbahn 1 angeordnet sind und daß der obere Bereich der Öffnung 4 durch die Abdeckbahn 1 übergriffen wird, wobei in diesem Bereich die Abdeckbahn 1 einen Kreuzschlitz 15 aufweist. Hier ist also das Entweichen von Gas problemlos möglich, wobei der große Bereich der Öffnung 4 durch Feststoffpartikelchen der Gülle nicht verstopft werden kann.

Die Abdeckbahn 1 weist weiterhin einen Öffnungsbereich 5 auf, der bei dem dargestellten Ausführungsbeispiel dreiseitig, nämlich in dem Bereich, in dem Flüssigkeit in diesen Öffnungsbereich eindringen könnte, durch über die Oberfläche der Abdeckbahn 1 vorstehende Abdichtwulste 7 verschlossen wird. Der Öffnungsbereich 5 wird dabei durch einen Ausschnitt 6 aus der Abdeckbahn 1 definiert, wobei dieser Ausschnitt als Bahnausschnitt 6 in Fig. 4 erkennbar ist. Abgedeckt wird dieser Bahnausschnitt 6 innerhalb des durch die Abdichtwulste 7 bestimmten Bereiches durch eine Verschlußbahn 8, die durch Schaumstoffplatten 11 gebildet wird, wobei diese Schaumstoffplatten 11 in einer entsprechenden flüssigkeits- und gasdichten Folie eingeschweißt sein können. Die Schaumstoffplatten 11 bzw. die diese umgebende Folie schließen bzw. schließt über hochstehende Dichtflansche 12 an die Abdichtwulste 7 an. An der oberen Seite der Verschlußbahn 8 ist ein Zugmittel 16 vorgesehen, mit welchem die zieharmonikaartig zusammenfaltbaren Schaumstoffplatten 11 betätigt werden können.

An den Randkanten der Abdeckbahn 1 sind Zugschlaufen 10 vorgesehen, mit denen das Einziehen der Abdeckbahn 1 - beispielsweise mittels einer landwirtschaftlichen Zugmaschine - in ein Erdbecken 17 möglich ist. Weiterhin kann am Randbereich der Abdeckbahn 1 ein entsprechender Randwulst 22, wie er aus Fig. 1 und 2 erkennbar ist, vorgesehen sein.

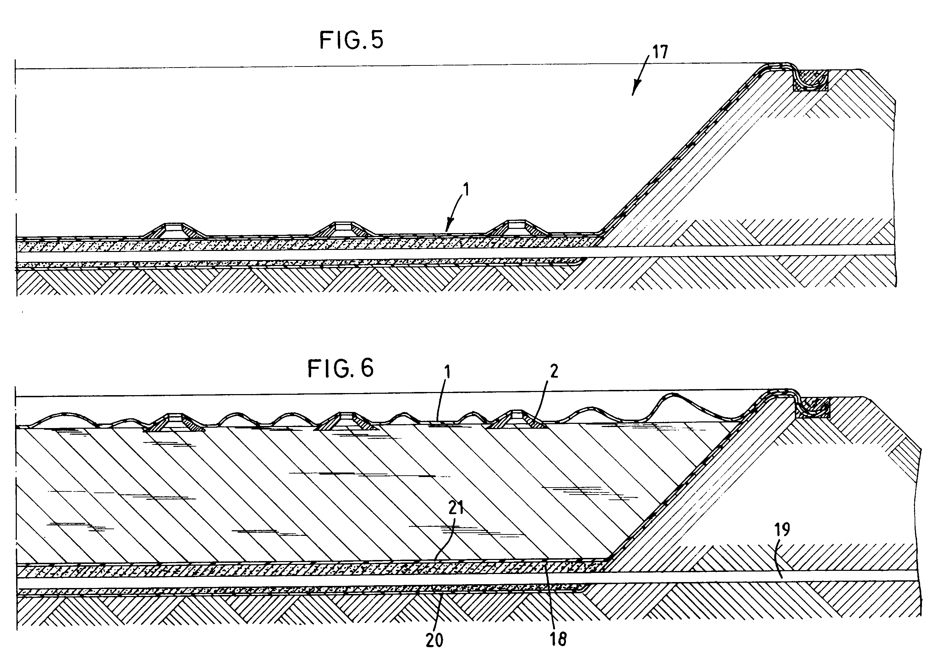

Fig. 5 zeigt ein Erdbecken 17, das im unteren Bereich durch eine durchlässige Materialschicht 18 abgedeckt ist, die beispielsweise aus Sand oder Kies besteht, wobei in diese Materialschicht 18 ein Kontrolldrainagerohr 19 eingezogen sein kann. Die Unterseite der durchlässigen Materialschicht 18 wird durch eine Dichtungsbahn 20 und die Oberseite durch eine weitere Dichtungsbahn 21 abgedeckt. Weiterhin ist in den Fig. 5 und 6 die Abdeckbahn 1 erkennbar. Während gemäß Fig. 5 die Abdeckbahn 1 lediglich in das Erdbecken 17 eingezogen ist, ist sie in Fig. 6 so dargestellt, als ob das Erdbecken 17 im wesentlichen mit Flüssigkeit gefüllt ist. Aus diesem Grunde ist die Abdeckbahn 1 gewölbt dargestellt.

Auf jeden Fall sind die Gasdurchtrittsöffnungen 2 erkennbar. Weiterhin ist aus den Fig. 5 und 6 erkennbar, daß sowohl die Dichtungsbahnen 20 und 21 wie auch die Abdeckbahn 1 im Randbereich festgelegt sein kann. In diesem Randbereich liegt also normalerweise die Abdeckbahn 1 auf Erdboden auf und hier können - wie dies Fig. 1 zeigt - Entlüftungsöffnungen 9 vorgesehen sein, die als kreuzschlitze ausgebildet sind.

Die Zeichnungen sind nicht maßstabsgerecht und um eine Vorstellung über die richtigen Größenverhältnisse zu geben, werden nachfolgend die Maßangaben für ein Ausführungsbeispiel gegeben: Größe der Abdeckbahn 1 = 26 m x 26 m
Großer Durchmesser der Schwimmkörper 3 = 80 cm
Öffnungsdurchmesser der oberen Öffnung der Schwimmkörper 3 = 8 cm Durchmesser der Entlüftungsöffnungen 9 = 5 mm
Breite des Öffnungsbereiches 5 = 2,80 m
Länge des Öffnungsbereiches 5 = 7,50 m
Länge der Zugschlaufen 10 = 50 cm

## Patentansprüche

1. Abdeckung für Flüssigkeitsbecken aus einer flexiblen flüssigkeits- und gasdichten Gewebe- und/oder Folienbahn als Abdeckbahn (1), die mit über die ganze Fläche der Abdeckbahn (1) verteilt angeordneten Gasdurchtrittsöffnungen (2) und weiterhin mit Schwimmkörpern (3) versehen ist, dadurch gekennzeichnet, daß im Bereich der Gasdurchtrittsöffnungen (2) hohlkegelförmige, je eine axial durchgängige Öffnung (4) aufweisende Schwimmkörper (3) an der Bahn (1) befestigt sind, die Gasdurchtrittsöffnungen (2) im Bereich der oberen Mündung der Öffnung (4) des hohlkegelförmigen Schwimmkörpers (3) vorgesehen sind und die Abdeckbahn (1) im Bereich der Mündung der Öffnung (4) einen Kreuzschlitz als Öffnung aufweist.

2. Abdeckung nach Anspruch 1, dadurch gekennzeichnet, daß die Öffnung (4) ebenfalls kegelförmig ausgebildet ist.

3. Abdeckung nach einem der vorhergehenden Ansprüche, dadurch gekennzeichnet, daß die Abdeckbahn (1) wenigstens im Bereich einer Seitenkante einen Öffnungsbereich (5) aufweist, der durch einen Bahnausschnitt (6) definiert wird, wobei die Ränder des Bahnausschnittes (6) mit über die Oberseite der Abdeckbahn (1) vorstehenden Abdichtwulsten (7) flüssigkeitsdicht verbunden sind und der Öffnungsbereich (5) durch eine zieharmonikaartig faltbare Verschlußbahn (8) abdeckbar ist.

4. Abdeckung nach einem der vorhergehenden Ansprüche, dadurch gekennzeichnet, daß die die Gasdurchtrittsöffnungen (2) umgebenden Schwimmkörper (3) in dem Bereich der Abdeckbahn (1) angeordnet sind, der auf der abzudeckenden Flüssigkeit aufliegt.

5. Abdeckung nach einem der vorhergehenden Ansprüche, dadurch gekennzeichnet, daß im Randbereich der Abdeckbahn (1) einfache Entlüftungsöffnungen (9) angeordnet sind.

6. Abdeckung nach einem der vorhergehenden Ansprüche, gekennzeichnet durch Zugschlaufen (10) an den Randkanten der Abdeckbahn (1).

7. Abdeckung nach Anspruch 3, dadurch gekennzeichnet, daß die Verschlußbahn (8) aus flüssigkeitsdicht eingeschweißten Schaumstoffplatten (11) besteht.

8. Abdeckung nach Anspruch 3 und 7, dadurch gekennzeichnet, daß die Schaumstoffplatten (11) über Dichtflansche (12) an die Abdichtwülste (7) anschließen.

9. Abdeckung nach einem der vorhergehenden Ansprüche, dadurch gekennzeichnet, daß die Entlüftungsöffnungen (9) immer in Feldern zusammengefaßt sind, wobei die einzelnen Felder im Abstand voneinander angeordnet sind.

## Claims

1. A cover for fluid reservoirs comprising a flexible liquid- and gas-tight woven and/or foil web as covering web (1), which is provided with gas passage openings (2) arranged distributed over the entire surface of the covering web (1) and also with floats (3), characterised in that hollow cone-shaped floats (3), each comprising an axially through-going opening (4), are fixed to the web (1) in the area of the gas passage openings (2), in that the gas passage openings (2) are provided in the area of the upper mouth of the opening (4) of the hollow cone-shaped float (3) and in that the covering web (1) comprises a cross recess as opening in the area of the mouth of the opening (4).

2. A cover according to claim 1, characterised in that the opening (4) is likewise of cone-shaped construction.

3. A cover according to either one of the preceding claims, characterised in that the covering web (1) comprises an opening area (5) at least in the area of a side edge, which opening area (5) is defined by a web notch (6), the edges of the web notch (6) being connected fluid-tightly with sealing beads (7) projecting beyond the top of the covering web (1) and in that the opening area (5) can be covered by a concertina-foldable closing web (8).

4. A cover according to any one of the preceding claims, characterised in that the floats (3) surrounding the gas passage openings (2) are arranged in the area of the covering web (1), which lies on the fluid to be covered.

5. A cover according to any one of the preceding claims, characterised in that simple ventilation openings (9) are arranged in the edge area of the covering web (1).

6. A cover according to any one of the preceding claims, characterised by pull loops (10) at the edges of the covering web (1).

7. A cover according to claim 3, characterised in that the closing web (8) consists of liquid-tight welded foamed material plates (11).

8. A cover according to claim 3 and claim 7, characterised in that the foamed material plates (11) adjoin the sealing beads (7) via sealing flanges (12).

9. A cover according to any one of the preceding claims, characterised in that the ventilation openings (9) are always combined into groups, the individual groups being arranged at a distance from each other.

## Revendications

1. Recouvrement pour récipients à liquide, en tissu et/ou bande de feuille étanche au liquide et au gaz servant de bande de recouvrement (1), et qui est dotée d'ouvertures de passage de gaz (2) dispersées sur toute la surface de la bande de recouvrement (1), ainsi que de flotteurs (3), **caractérisé en ce qu'**au voisinage des ouvertures de passage de gaz (2) des flotteurs coniques creux (3) présentant chacun une ouverture axiale de passage (4) sont fixés sur la bande (1), en ce que les ouvertures de passage de gaz (2) sont prévues au voisinage de l'embouchure supérieure de l'ouverture (4) du flotteur conique creux (3), et en ce que la bande de recouvrement (1) présente au voisinage de l'embouchure de l'ouverture (4) une fente en croix servant d'ouverture.

2. Recouvrement selon la revendication 1, **caractérisé en ce que** l'ouverture (4) est également de forme conique.

3. Recouvrement selon l'une des revendications précédentes, **caractérisé en ce que** la bande de recouvrement (1) présente au moins au voisinage d'un bord latéral une zone ouverte (5) définie par une découpe (6) pratiquée dans la bande, les bords de la découpe (6) de la bande étant reliés de manière étanche aux liquides par des bourrelets d'étanchéité (7) débordant de la face supérieure de la bande de recouvrement (1), la zone ouverte (5) pouvant être recouverte par une bande de fermeture (8) repliable en accordéon.

4. Recouvrement selon l'une des revendications précédentes, **caractérisé en ce que** les flotteurs (3) entourant les ouvertures de passage de gaz (2) sont disposés dans la partie de la bande de recouvrement (1) qui repose sur le liquide à recouvrir.

5. Recouvrement selon l'une des revendications précédentes, **caractérisé en ce que** de simples ouvertures d'évent (9) sont disposées au voisinage des bords de la bande de recouvrement (1).

6. Recouvrement selon l'une des revendications précédentes, **caractérisé par** une ourlet de traction (10) situé sur les bords de la bande de recouvrement (1).

7. Recouvrement selon la revendication 3, **caractérisé en ce que** la bande de fermeture (8) est constituée de plaques de mousse (11) étanches aux liquides et incorporées par soudage.

8. Recouvrement selon la revendication 3 et la revendication 7, **caractérisé en ce que** les plaques de mousse (11) se raccordent au bourrelet d'étanchéité (7) par l'intermédiaire de brides d'étanchéité.

9. Recouvrement selon l'une des revendications précédentes, **caractérisé en ce que** les ouvertures d'évent (9) sont toujours rassemblées en ensembles, chacun des ensembles étant disposé à distance des autres.
